# EUROPEAN PATENT APPLICATION

(11) **EP 4 516 737 A1**
(43) Date of publication of application: **05.03.2025**
(21) Application number: 24768887.2
(22) Date of filing: 29.04.2024
(51) Int. Cl.: C01B 32/984

(54) **LARGE-KILOGRAM SILICON CARBIDE POWDER SYNTHESIS METHOD**

(30) Priority: 07.07.2023 CN 202310826893
(71) Applicant: Tongwei Microelectronics Co., Ltd., Chengdu, Sichuan 610299 (CN)
(72) Inventor: XU, Hongli, Sichuan 610299 (CN); LIN, Yuyi, Sichuan 610299 (CN); YANG, Shili, Sichuan 610299 (CN)
(74) Representative: IPrime Bonnekamp Sparing Patentanwaltsgesellschaft mbH
(86) International application number: PCT/CN2024/090469
(87) International publication number: WO 2025/011139

(57) **Abstract**

The present disclosure provides a synthesis method for higher quantity measured in kilograms silicon carbide powder, and relates to the technical field of silicon carbide powder preparation. The method includes the steps of heating a furnace chamber to a first impurity removal temperature T1, and removing a large amount of impurity gas, so as to achieve primary impurity removal; then heating the furnace chamber to a second impurity removal temperature T2, and continuously taking away impurity gas, so as to achieve secondary impurity removal, and continuously removing impurities; and finally, heating the furnace chamber to a third impurity removal temperature, so as to achieve tertiary impurity removal through tertiary decomposition gas. Compared with the prior art, on one hand, preparation of higher quantity measured in kilograms powder is achieved, and the output rate is increased. On the other hand, the impurity removal effect is greatly improved, and the purity of the powder can be effectively improved.

## Description

### TECHNICAL FIELD

The present disclosure relates to the technical field of preparation of silicon carbide powder, in particular to a synthesis method for higher quantity measured in kilograms silicon carbide powder.

### BACKGROUND ART

In a conventional preparation solution for silicon carbide powder, usually, carbon and silicon raw materials are directly added to a large crucible, and a synthesis reaction is achieved after heating, so as to synthesize the silicon carbide powder. According to this preparation manner, on one hand, preparation of higher quantity measured in kilograms powder cannot be achieved, and carbonization and crystallization will be formed in the synthesis process in a case that there are excessive carbon and silicon raw materials, thereby affecting subsequent synthesis. On the other hand, the carbon and silicon raw materials are both placed in the large crucible, resulting in more losses, the overstocking effect is obvious, and the output yield is lower. Moreover, the conventional preparation solution for the silicon carbide powder is worse in impurity removal effect and lower in purity. In addition, a conventional impurity removal solution usually involves single high-temperature-range impurity removal, resulting in a poor impurity removal effect.

### SUMMARY

An objective of the present disclosure is to, for example, provide a synthesis method for higher quantity measured in kilograms silicon carbide powder and the silicon carbide powder. By means of the method, the carbonization amount can be reduced, the output rate can be effectively increased, ventilation and impurity removal can be effectively performed on raw materials, and therefore the purity of the powder can be effectively improved; and by the adoption of a dispersed loading manner, overstocking of the raw materials is relieved, carbonization and crystallization are retarded, and preparation of the higher quantity measured in kilograms powder is achieved. Meanwhile, the impurity removal effect is good.

Embodiments of the present disclosure may be implemented as follows:
In a first aspect, an embodiment of the present disclosure provides a synthesis method for higher quantity measured in kilograms silicon carbide powder, including:
loading carbon and silicon raw materials in a plurality of reaction crucibles in a preset ratio, an impurity removal hole being formed in a top end of each reaction crucible;
stacking the plurality of reaction crucibles in an accommodating crucible, and placing the accommodating crucible in a furnace chamber;
laying a PVC particle layer at a bottom of the accommodating crucible;
performing displacement vacuum-pumping on the furnace chamber;
heating the furnace chamber to a first impurity removal temperature T1, keeping for first preset time t1, and pumping vacuum after injecting rare gas into the furnace chamber, so as to decompose the PVC particle layer into primary decomposition products and primary decomposition gas, and achieve primary impurity removal through the primary decomposition gas;
heating the furnace chamber to a second impurity removal temperature T2, keeping for second preset time t2, and pumping vacuum after injecting rare gas into the furnace chamber, so as to decompose the primary decomposition products into secondary decomposition products and secondary decomposition gas, and achieve secondary impurity removal through the secondary decomposition gas;
heating the furnace chamber to a third impurity removal temperature T3, keeping for third preset time t3, and pumping vacuum after injecting rare gas into the furnace chamber, so as to decompose the secondary decomposition products into tertiary decomposition products and tertiary decomposition gas, and achieve tertiary impurity removal through the tertiary decomposition gas;
heating the furnace chamber to a preliminary reaction temperature T4, and keeping for fourth preset time t4, so as to achieve a preliminary synthesis reaction between the carbon and silicon raw materials;
heating the furnace chamber to a transformation reaction temperature T5, and keeping for fifth preset time t5, so as to achieve a transformation synthesis reaction between the carbon and silicon raw materials; and
cooling the furnace chamber.

In an optional implementation, before the step of loading carbon and silicon raw materials in a plurality of reaction crucibles in a preset ratio, the synthesis method further includes:
laying a PVC particle layer at bottoms of the plurality of reaction crucibles.

In an optional implementation, the step of heating the furnace chamber to a first impurity removal temperature T1, keeping for first preset time t1, and pumping vacuum after injecting rare gas into the furnace chamber, includes:
heating the furnace chamber to 100-500°C, and keeping for 1-5 hours, so as to decompose the PVC particle layer into primary decomposition products and primary decomposition gas;
injecting argon into the furnace chamber to 500-700 torr, and keeping for 10-30 minutes; and
pumping vacuum from the furnace chamber to at least e⁻⁴ pa, and taking away impurity gas under an adhesive action of the primary decomposition gas for expelling.

In an optional implementation, the step of heating the furnace chamber to a second impurity removal temperature T2, keeping for second preset time t2, and pumping vacuum after injecting rare gas into the furnace chamber, includes:
heating the furnace chamber to 500-900°C, and keeping for 10-15 hours, so as to decompose the primary decomposition products into secondary decomposition products and secondary decomposition gas;
injecting argon into the furnace chamber to 100-500 torr, and keeping for 10-30 minutes; and
pumping vacuum from the furnace chamber to at least e⁻⁴ pa, and taking away impurity gas under an adhesive action of the secondary decomposition gas for expelling.

In an optional implementation, the step of heating the furnace chamber to a third impurity removal temperature T3, keeping for third preset time t3, and pumping vacuum after injecting rare gas into the furnace chamber, includes:
heating the furnace chamber to 1,200-1,400°C, and keeping for 5-10 hours, so as to decompose the secondary decomposition products into tertiary decomposition products and tertiary decomposition gas;
injecting argon into the furnace chamber to 20-100 torr, and keeping for 10-30 minutes; and
pumping vacuum from the furnace chamber to at least e⁻⁴ pa, and taking away impurity gas under an adhesive action of the tertiary decomposition gas for expelling;
wherein the tertiary decomposition products are carbon, and the tertiary decomposition gas is hydrogen and chlorine.

In an optional implementation, before the step of stacking the plurality of reaction crucibles in an accommodating crucible, the synthesis method further includes:
uniformly and flatly pasting a plurality of layers of graphite flakes at bottoms of the plurality of reaction crucibles.

In an optional implementation, before the step of heating the furnace chamber to a first impurity removal temperature T1, keeping for first preset time t1, and pumping vacuum after injecting rare gas into the furnace chamber, the synthesis method further includes:
adjusting a temperature field, such that an axial gradient of an upper temperature range of the temperature field is 100-200°C, and an axial gradient of a lower temperature range is 30-80°C; and
adjusting a relative position of the accommodating crucible in the temperature field, such that the accommodating crucible is located within the upper temperature range.

In an optional implementation, the step of heating the furnace chamber to a transformation reaction temperature T5, and keeping for fifth preset time t5, includes:
adjusting the relative position of the accommodating crucible in the temperature field, such that the accommodating crucible is located within the lower temperature range; and
heating the furnace chamber to 2,100-2,200°C for a transformation synthesis reaction, wherein transformation synthesis time lasts for 15-30 hours.

In an optional implementation, the step of heating the furnace chamber to a preliminary reaction temperature T4, and keeping for fourth preset time t4, includes:
heating the furnace chamber to 1,800-1,900°C for the preliminary synthesis reaction, wherein preliminary synthesis time lasts for 4-6 hours.

In a second aspect, the present disclosure provides silicon carbide powder, which is prepared through the synthesis method for the higher quantity measured in kilograms silicon carbide powder as described in any of the above implementations.

The embodiments of the present disclosure have the following beneficial effects, for example,
according to the synthesis method for the higher quantity measured in kilograms silicon carbide powder and the silicon carbide powder provided by the embodiments of the present disclosure, during actual preparation, firstly, the carbon and silicon raw materials are loaded in the plurality of reaction crucibles in the preset ratio, then the plurality of reaction crucibles are stacked in the accommodating crucible, the accommodating crucible is placed in the furnace chamber, then the PVC particle layer is laid at the bottom of the accommodating crucible, and displacement vacuum-pumping is performed on the furnace chamber, so as to remove air in the furnace chamber. In a heating period, the furnace chamber is firstly heated to the first impurity removal temperature T1, the rare gas is injected into the furnace chamber and vacuum is pumped, and a large amount of impurity gas is removed from the furnace chamber and the materials through the primary decomposition gas of the PVC particle layer, so as to achieve primary impurity removal; then the furnace chamber is heated to the second impurity removal temperature T2, impurity gas is continuously taken away through the secondary decomposition gas generated by continuous decomposition, so as to achieve secondary impurity removal, and impurities are continuously removed; finally, the furnace chamber is heated to the third impurity removal temperature, tertiary impurity removal is achieved through the tertiary decomposition gas, and the furnace chamber may be sequentially heated to the preliminary reaction temperature T4 after impurity removal, such that the carbon and silicon raw materials undergo the preliminary synthesis reaction; then the furnace chamber is heated to the transformation reaction temperature T5, such that the carbon and silicon raw materials undergo the transformation synthesis reaction, to generate the silicon carbide powder; and finally the furnace chamber is cooled, and the silicon carbide powder is taken out. Compared with the prior art, on one hand, dispersed placement of the raw materials is achieved through the stacked reaction crucibles; and by the adoption of a dispersed loading manner, overstocking of the raw materials is relieved, carbonization and crystallization are retarded, preparation of higher quantity measured in kilograms powder is achieved, and the output rate is increased. On the other hand, a plurality of times of impurity removal within different temperature ranges can be achieved through gaseous substances decomposed from PVC particles within different temperature ranges, such that the impurity removal effect is greatly improved, and the purity of the powder can be effectively improved.

### BRIEF DESCRIPTION OF THE DRAWINGS

In order to more clearly explain the technical solutions of embodiments of the present disclosure, drawings required to be used in the embodiments will be briefly described below. It should be understood that the following drawings only illustrate some embodiments of the present disclosure, and thus should not be regarded as limitations to the scope, and according to which, those ordinarily skilled in the art can also obtain other drawings without involving inventive efforts.
FIG. 1 is a step block diagram of a synthesis method for higher quantity measured in kilograms silicon carbide powder provided by the present disclosure;
FIG. 2 is a structural diagram of a device for a synthesis method for higher quantity measured in kilograms silicon carbide powder provided by the present disclosure;
FIG. 3 is an experimental verification diagram of a synthesis method for higher quantity measured in kilograms silicon carbide powder provided by the present disclosure;
FIG. 4 is a schematic locally enlarged diagram of IV in FIG. 2;
FIG. 5 is a morphological map of silicon carbide powder provided by the present disclosure in a first view;
FIG. 6 is a morphological map of silicon carbide powder provided by the present disclosure in a second view; and
FIG. 7 is a morphological map of silicon carbide powder provided by the present disclosure under a microscope.

Reference signs: 100-accommodating crucible; 200-reaction crucible; 300-carbon and silicon raw materials; 400-PVC particle layer; 500-volatile solution layer; and 510-adhesive layer.

### DETAILED DESCRIPTION OF THE EMBODIMENTS

In order to make the objectives, technical solutions and advantages of the embodiments of the present disclosure clearer, the technical solutions in the embodiments of the present disclosure will be described clearly and completely with reference to the embodiments of the present disclosure. Apparently, the described embodiments are part of the embodiments, not all of the embodiments. The components of the embodiments of the present disclosure generally described and illustrated in the drawings herein may be arranged and designed in a wide variety of different configurations.

Thus, the following detailed description of the embodiments of the present disclosure, as presented in the drawings, is not intended to limit the scope of the present disclosure, as claimed, but is merely representative of selected embodiments of the present disclosure. All other embodiments obtained by those ordinarily skilled in the art based on the embodiments of the present disclosure without involving inventive efforts should fall within the protection scope of the present disclosure.

It should be noted that like reference numerals and letters denote like items in the following drawings, and thus once an item is defined in one drawing, no further definition or explanation thereof is necessary in the following drawings.

In the description of the present disclosure, it should be understood that orientation or position relationships indicated by terms "upper", "lower", "inner", "outer", and the like are orientation or position relationships shown in the drawings, or orientation or position relationships based on which products of the present disclosure are usually placed, are adopted not to indicate or imply that indicated devices or elements must be in specific orientations or structured and operated in specific orientations but only to conveniently describe the present disclosure and simplify the description, and thus should not be understood as a limitation to the present disclosure.

In addition, terms "first", "second", and the like are merely used for distinguishing between descriptions and should not be understood as the indication or implication of relative importance.

As disclosed in the background, a synthesis method for silicon carbide powder in the prior art, usually has the following defects:
1. Raw materials are usually directly mixed and then added to a large crucible, in a case that there are excessive carbon and silicon raw materials, a high temperature needs to be applied in order to achieve complete synthesis of the raw materials inside the crucible, an outer edge of powder will be carbonized and volatilized, overstocking will be formed during conventional synthesis of higher quantity measured in kilograms powder, resulting in incomplete internal synthesis of the powder, and therefore synthesis of the higher quantity measured in kilograms silicon carbide powder is hardly achieved in such manner.
2. The carbon and silicon raw materials are both placed in the large crucible, resulting in more losses, the overstocking effect is obvious, and the output yield is lower.
3. In a conventional preparation solution for silicon carbide powder, high-temperature impurity removal is adopted in the impurity removal process, and the impurity removal effect is poor, resulting in lower purity of the synthesized powder and high high-temperature impurity removal cost.
4. In a conventional impurity removal solution, hydrogen, chlorine and other process gas usually need to be directly introduced, however, the hydrogen and the chlorine are not convenient to store since they have a high risk coefficient, and apparatus costs and maintenance costs need to be increased by introducing the hydrogen and the chlorine into a furnace body.

In order to solve the above problems, the present disclosure provides a novel synthesis method for higher quantity measured in kilograms silicon carbide powder and the silicon carbide powder. It should be noted that the features in the embodiments of the present disclosure may be mutually combined without conflicts.

### DETAILED EMBODIMENTS

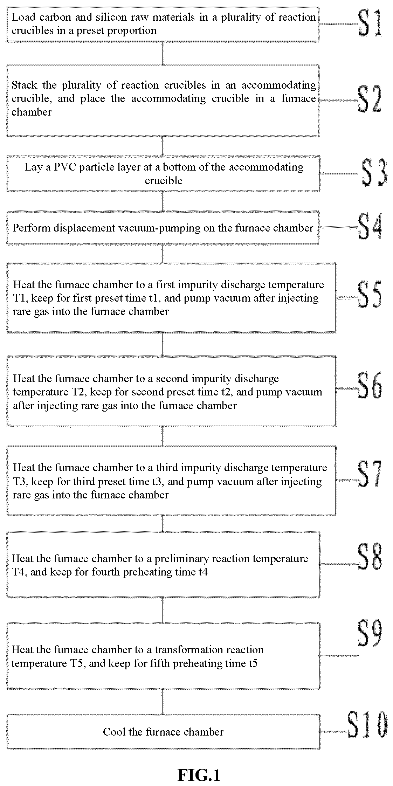

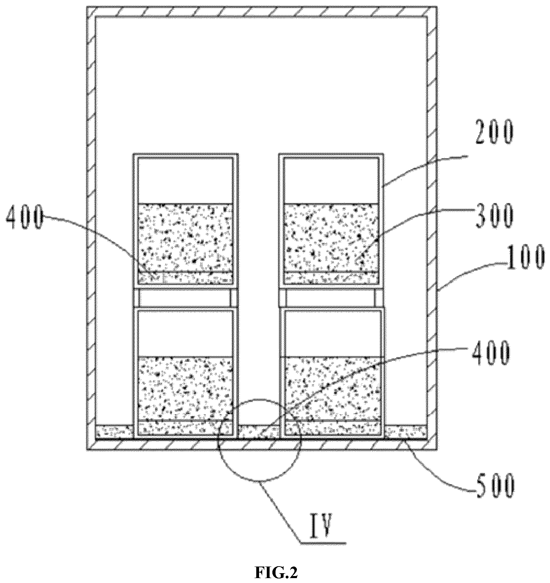

Referring to FIG. 1 and FIG. 2, this embodiment provides a novel synthesis method for higher quantity measured in kilograms silicon carbide powder, used for preparing the high-purity silicon carbide powder. By the adoption of this method, the carbonization amount in the synthesis process can be reduced, the output rate can be effectively increased, ventilation and impurity removal can be effectively performed on raw materials, and therefore the purity of the powder can be effectively improved; and by the adoption of a dispersed loading manner, overstocking cannot be formed by stacking the crucibles, thereby achieving complete synthesis, carbonization and volatilization are less, the quantity measured in kilograms and output rate are both increased, overstocking of the raw materials is reduced, carbonization and crystallization are retarded, and preparation of the higher quantity measured in kilograms powder is achieved. It is unnecessary to additionally introduce hydrogen or chlorine or other process gas, thereby ensuring the safe and reliable synthesis process, and a device is simple in structure and low in cost.

The synthesis method for the higher quantity measured in kilograms silicon carbide powder provided by this embodiment, includes the following steps:
S1: carbon and silicon raw materials 300 are loaded in a plurality of reaction crucibles 200 in a preset ratio.

Specifically, the carbon and silicon raw materials 300 may be loaded in the reaction crucibles 200 in a molar ratio of 1: (1-1.1) here. In the loading process, the raw materials may be filled up to 2/5-4/5 of the reaction crucibles 200, and preferably, may be filled up to 2/3 of the reaction crucibles 200, thereby ensuring the synthesis reaction effect and reserving enough impurity gas removal flow space in the subsequent impurity removal process.

It should be noted that the reaction crucibles 200 in this embodiment are all of a secondary seal structure, secondary seal parts are located on tops of the reaction crucibles 200, that is, crucible covers of the reaction crucibles 200 cover bodies in a sealed manner, and impurity removal holes are formed in the crucible covers, which is conducive to subsequent impurity removal.

In this embodiment, before the raw materials are loaded, a PVC particle layer 400 may further be laid at bottoms of the plurality of reaction crucibles 200, the PVC particle layer 400 is high-purity fine powder, its thickness is 10-50 mm, and preferably, 20 mm, and an impurity content of high-purity PVC is less than 5 ppm.

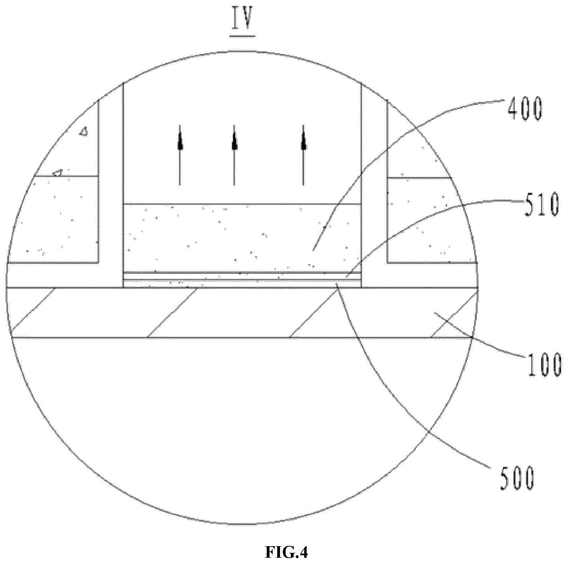

In conjunction with FIG. 2 and FIG. 4, specifically, before the reaction crucibles 200 are loaded in an accommodating crucible 100, and a bottom wall of the accommodating crucible 100 may further be coated with a volatile solution. The volatile solution may include an alcohol solution or an ether solution, wherein a concentration of the volatile solution may be higher, preferably, the volatile solution may be in a thick state, that is, the volatile solution in a semi-flowing state is adopted for coating, so as to form a volatile solution layer 500, thereby achieving a better fixing effect when the bottom wall of the accommodating crucible 100 is coated with the volatile solution.

It should be noted that the volatile solution mentioned here refers to that it has thermal volatility, that is, corresponding gas will be volatilized in a heating state, and the volatilization amount in the coating process and a non-heating state may be relatively neglected. Moreover, in this embodiment, by coating the bottom of the accommodating crucible 100 with the volatile solution, impurity gas in the accommodating crucible 100 can be rapidly taken away through volatile gas, and removal of the impurity gas from the reaction crucibles 200 can be accelerated. Different from a conventional manner of adding a volatile material to a mixture, the volatile solution in this embodiment neither occupies the internal volume of the reaction crucibles 200 nor directly makes contact with the mixture for the reaction, thereby further ensuring the preparation efficiency and preparation purity.

Of course, it is also possible not to coat the bottom wall of the accommodating crucible 100 with the volatile solution, and low-temperature impurity removal is achieved merely through the changes in the temperature and air pressure.

Furthermore, in order to prevent the volatile solution from flowing or moving along a wall surface in the coating process, a surface of the volatile solution may be coated with an adhesive layer 510 with a low melting point again after coating with one layer of volatile solution, and the adhesive layer may be, for example, an epoxy resin adhesive layer. On one hand, the volatile solution can be protected and fixed, on the other hand, the volatile solution can be prevented from being massively volatilized before reaching a low-temperature impurity removal temperature, and the adhesive layer 510 may also be decomposed together in the low-temperature impurity removal process achieved by subsequent heating, thereby reducing its influences.

S2: the plurality of reaction crucibles 200 are stacked in the accommodating crucible 100, and the accommodating crucible 100 is placed in a furnace chamber.

Specifically, the plurality of reaction crucibles 200 may be placed in the accommodating crucible 100 in a vertically stacked manner, during specific placement, the reaction crucible 200 on a bottom layer may be placed firstly, one layer of reaction crucible 200 is placed on an upper portion of the reaction crucible 200 on the bottom layer, and the operation is repeated till the whole accommodating crucible 100 is filled. The horizontal distribution condition of each layer of reaction crucible 200 is not specifically limited here.

It should be noted that the reaction crucibles 200 are placed at intervals inside the accommodating crucible 100, a plurality of layers of graphite flakes may further be uniformly and flatly pasted at bottoms of the plurality of reaction crucibles 200. Specifically, 5-8 layers of graphite flakes may be uniformly and flatly pasted at the bottom of an outer layer of each reaction crucible 200, volatile substances on the lower portion of the reaction crucible may be prevented from being directly volatilized and adsorbed to bottom walls of the reaction crucibles 200,resulting in adhesion between every two adjacent layers of reaction crucibles 200, the reaction crucibles 200 can be conveniently taken out subsequently, and the bodies of the reaction crucibles 200 can be prevented from being damaged when the reaction crucibles 200 are taken out. Wherein the volatile substances below each reaction crucible 200 may come from an interior of a next layer of reaction crucible 200, or may come from the bottom wall of the accommodating crucible 100.

S3: a PVC particle layer 400 is laid at a bottom of the accommodating crucible.

Specifically, the PVC particle layer 400 may be laid at the bottom of the accommodating crucible 100 after the reaction crucibles 200 are placed in the accommodating crucible 100, the PVC particle layer 400 is laid around the reaction crucible 200 at the bottom, the PVC particle layer 400 is high-purity fine powder, its thickness is 10-50 mm, and preferably, 20 mm, and an impurity content of high-purity PVC is less than 5 ppm.

S4: displacement vacuum-pumping is performed on the furnace chamber.

Specifically, vacuum may be pumped from the furnace chamber to at least e⁻⁴ pa, then argon is injected into the furnace chamber to 500-700 torr, and kept for 10-30 minutes, vacuum is pumped from the furnace chamber to at least e⁻⁴ pa, then the operation is repeated 2-3 times, and gas in the furnace chamber is emptied in a displacement vacuum-pumping manner.

S5: the furnace chamber is heated to a first impurity removal temperature T1, and kept for first preset time t1, and vacuum is pumped after rare gas is injected into the furnace chamber.

Specifically, the first impurity removal temperature T1 may be 100-500°C, and preferably 300°C. When step S5 is actually executed, the furnace chamber may be firstly heated to 100-500°C, and kept for 1-5 hours. At this temperature, the PVC particle layer 400 will be preliminarily decomposed into primary decomposition products and primary decomposition gas, wherein the primary decomposition products are mainly residual PVC, vinyl chloride and carbon tetrachloride, dichloroethylene and the like, and the primary decomposition gas is mainly hydrogen chloride and other gas. Then argon is injected into the furnace chamber to 500-700 torr, and kept for 10-30 minutes, and it can be ensured that the primary decomposition gas makes full contact with and adheres to H₂O, N₂, O₂, CO₂, CO and other impurity gas in the raw materials or the furnace chamber in this period. Finally, vacuum is pumped from the furnace chamber to at least e⁻⁴ pa, such that the primary decomposition gas and the impurity gas adhering to the same are removed, so as to complete primary impurity removal.

At the same time, the volatile solution at the bottom of the accommodating crucible 100 may be completely in a volatilized state, a large amount of volatile gas is generated, the volatile gas may be adsorbed to impurities in the reaction crucibles 200 through the impurity removal holes, and meanwhile the volatile gas may further be adsorbed to the impurities in the accommodating crucible, and is pumped together with vacuum-pumping, thereby further achieving auxiliary impurity removal.

It is worth noting that before step S5 is executed, a temperature field may further be adjusted. Specifically, the temperature field is firstly adjusted, such that an axial gradient of an upper temperature range of the temperature field is 100-200°C, and an axial gradient of a lower temperature range is 30-80°C. Then a relative position of the accommodating crucible 100 in the temperature field is adjusted, such that the accommodating crucible 100 is located within the upper temperature range at a temperature below 1,800°C, and moves to the lower temperature range after being heated above 1,800°C subsequently. The raw materials can be prevented from being massively carbonized in the subsequent high-temperature heating process by firstly placing the accommodating crucible 100 within the upper temperature range, such that the synthesis output rate of the powder can be increased.

S6: the furnace chamber is heated to a second impurity removal temperature T2, it is kept for second preset time t2, and vacuum is pumped after rare gas is injected into the furnace chamber.

Specifically, the second impurity removal temperature T2 may be 500-900°C, and preferably 600°C. When step S6 is actually executed, the furnace chamber may be firstly heated to 500-900°C, and kept for 10-15 hours. At this temperature, PVC and other primary decomposition products left in step S5 will be continuously decomposed into secondary decomposition products and secondary decomposition gas, wherein the secondary decomposition products are mainly residual PVC, dichloroethylene, carbon tetrachloride, benzene substances and the like, and the secondary decomposition gas is mainly hydrogen chloride, methane chloride, dichloromethane and other gas. Then argon is injected into the furnace chamber to 100-500 torr, and kept for 10-30 minutes, and it can be ensured that the secondary decomposition gas makes full contact with and adheres to H₂O, N₂, O₂, CO₂, CO and other impurity gas in the raw materials or the furnace chamber and impurities such as Pb, P and Na in the raw materials in this period. Finally, vacuum is pumped from the furnace chamber to at least e⁻⁴ pa, such that the impurity gas and the impurities are taken away under an adhesive action of the secondary decomposition gas for expelling, so as to complete secondary impurity removal.

S7: the furnace chamber is heated to a third second impurity removal temperature T3, and kept for third preset time t3, and vacuum is pumped after rare gas is injected into the furnace chamber.

Specifically, the third removal temperature T3 may be 1,200-1,400°C, and preferably 1,300°C. When step S7 is actually executed, the furnace chamber may be firstly heated to 1,200-1,400°C, and kept for 5-10 hours. At this temperature, the secondary decomposition products left in step S6 will be completely decomposed into tertiary decomposition products and tertiary decomposition gas, wherein the tertiary decomposition products are carbon, and the tertiary decomposition gas is hydrogen and chlorine. Then argon is injected into the furnace chamber to 20-100 torr, and kept for 10-30 minutes, and it can be ensured that the tertiary decomposition gas makes full contact with and adheres to H₂O, N₂, O₂, CO₂, CO and other impurity gas in the raw materials or the furnace chamber and impurities such as Pb, P and Na in the raw materials in this period. Finally, vacuum is pumped from the furnace chamber to at least e⁻⁴ pa, such that the impurity gas and the impurities are taken away under an adhesive action of the tertiary decomposition gas for expelling, so as to complete tertiary impurity removal.

It should be noted that herein, the hydrogen may remove a large amount of residual nitrogen, while the chlorine has a strong oxidizing property, which may react with most metal impurities under a heating condition, for example, Au and Pt are burnt in hot chlorine, while the chlorine reacts with Fe, Cu and other valence-variable metals to generate high-valence metal chlorides, and the chlorides are volatilized and discharged at the high temperature, such that metal impurities are removed and purified, further ensuring the purity of the raw materials. The tertiary decomposition products C may be deposited at the bottom of the accommodating crucible 100 or the bottoms of the reaction crucibles 200, so as to prevent corrosion of silicon to the bottoms of the crucibles, and meanwhile silicon carbide may be generated through the reaction, thereby increasing the output rate.

It is worth noting that in the conventional art, hydrogen usually needs to be introduced as process gas during impurity removal, however, a certain risk exists during storage and transportation of the hydrogen since it has a high risk coefficient in an ordinary state, and apparatus costs and maintenance costs need to be increased by additionally arranging input pipelines. Different from the conventional art, the PVC particle materials in this embodiment are convenient to store and are non-dangerous substances in the ordinary state. It is unnecessary to additionally introduce hydrogen and chlorine in the impurity removal process in this embodiment, apparatuses for storage and transportation of relevant process gas are omitted accordingly, thereby saving costs and achieving a higher safety coefficient.

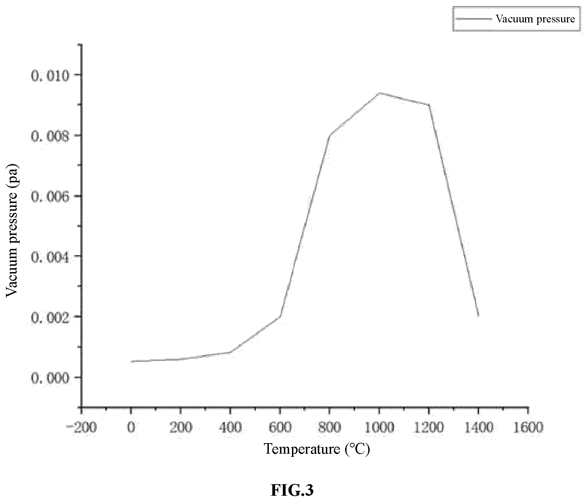

In the actual synthesis heating process of the raw materials, a relationship between the pressure and temperature in the furnace chamber is shown in FIG. 3. It can be shown from the experiment that the impurity removal effect is the best when the temperature is less than 1,000°C, however, only high-temperature impurity removal (that is, impurity removal and ventilation are performed only when the temperature is usually above 1,200°C) is usually performed in the prior art, while primary low-temperature impurity removal (100-500°C), secondary low-temperature impurity removal (500-900°C) as main impurity removal and ventilation and tertiary high-temperature impurity removal and ventilation (1,200-1,400°C) are adopted in the present application, which can achieve the impurity removal effect unreachable in the prior art.

S8: the furnace chamber is heated to a preliminary reaction temperature T4, and kept for fourth preset time t4, so as to achieve a preliminary synthesis reaction between the carbon and silicon raw materials.

Specifically, the carbon and silicon raw materials 300 may undergo the preliminary synthesis reaction by executing step S8. Specifically, the furnace chamber may be heated to 1,800-1,900°C for the preliminary synthesis reaction, wherein preliminary synthesis time lasts for 4-6 hours. Specifically, step S8 may be executed immediately after step S7, and the synthesis reaction may be performed after impurity removal is completed, wherein the furnace chamber reaches the lower preliminary reaction temperature T4 firstly, so as to achieve the preliminary synthesis reaction, and the synthesis time lasts for 4-6 hours.

S9: the furnace chamber is heated to a transformation reaction temperature T5, and kept for fifth preset time t5.

Specifically, the carbon and silicon raw materials 300 may undergo a transformation synthesis reaction by executing step S9. The relative position of the accommodating crucible 100 in the temperature field may be firstly adjusted, such that the accommodating crucible 100 is located within the lower temperature range; and then the furnace chamber is heated to 2,100-2,200°C for the transformation synthesis reaction, and transformation synthesis time lasts for 15-30 hours. The temperature gradient is smaller by adjusting the accommodating crucible 100 to the lower temperature range, such that the transformation synthesis reaction more easily reaches the reaction temperature.

S10: the furnace chamber is cooled.

Specifically, heating power of the furnace chamber is gradually reduced to zero within 1-2 hours; and then the furnace chamber is naturally cooled to a furnace dismantling temperature, and structural stress between the reaction crucibles 200 can be eliminated through natural cooling, which is conducive to dismantling the reaction crucibles 200 on different layers.

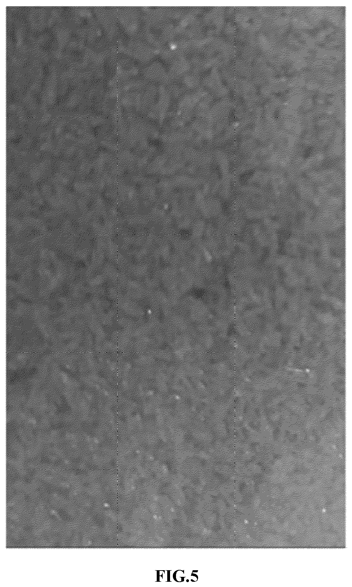

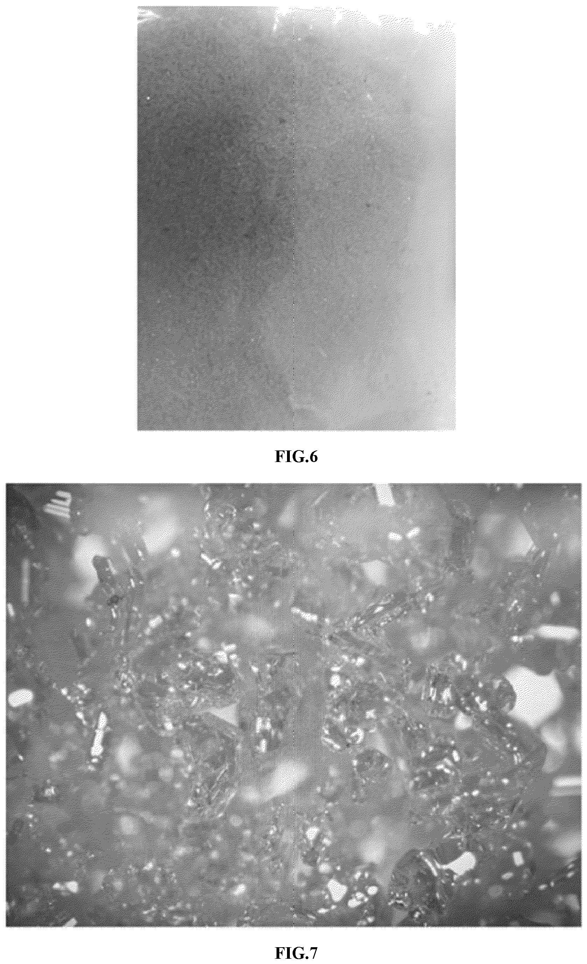

In conjunction with FIG. 5 to FIG. 7, this embodiment further provides silicon carbide powder, which is prepared through the above synthesis method for the higher quantity measured in kilograms silicon carbide powder, and is high in purity and quality. Specifically, FIG. 5 and FIG. 6 show morphological maps of the high-purity silicon carbide prepared through the above synthesis method. It can be shown from the figures that the silicon carbide is high in purity and low in N content, such that the synthesized silicon carbide can achieve a good semi-insulating property. Especially, it is determined that the purity of the silicon carbide powder provided by this embodiment is greater than or equal to 99.99977%, which is very excellent. FIG. 7 shows a map of the high-purity silicon carbide prepared through the above synthesis method under a microscope, and the high-purity silicon carbide has a crystal form of 4H.

In conclusion, according to the synthesis method for the higher quantity measured in kilograms silicon carbide powder and the silicon carbide powder provided by this embodiment, during actual preparation, firstly, the PVC particle layer 400 is laid at the bottoms of the reaction crucibles 200, the carbon and silicon raw materials 300 are loaded in the plurality of reaction crucibles 200 in the preset ratio, then the plurality of reaction crucibles 200 are stacked in the accommodating crucible 100, the accommodating crucible 100 is placed in the furnace chamber, then the PVC particle layer 400 is laid at the bottom of the accommodating crucible 100, and displacement vacuum-pumping is performed on the furnace chamber, so as to remove air in the furnace chamber. In a heating period, the furnace chamber is firstly heated to the first impurity removal temperature T1, the rare gas is injected into the furnace chamber and vacuum is pumped, and a large amount of impurity gas is removed from the furnace chamber and the materials through the primary decomposition gas of the PVC particle layer 400, so as to achieve primary low-temperature impurity removal; then the furnace chamber is heated to the second impurity removal temperature T2, impurity gas is continuously taken away through the secondary decomposition gas generated by continuous decomposition, so as to achieve secondary low-temperature impurity removal, and impurities are continuously removed; finally, the furnace chamber is heated to the third impurity removal temperature, tertiary high-temperature impurity removal is achieved through the tertiary decomposition gas, and the furnace chamber may be sequentially heated to the preliminary reaction temperature T4 after impurity removal, such that the carbon and silicon raw materials undergo the preliminary synthesis reaction; then the furnace chamber is heated to the transformation reaction temperature T5, such that the carbon and silicon raw materials undergo the transformation synthesis reaction, to generate the silicon carbide powder; and finally the furnace chamber is cooled, and the silicon carbide powder is taken out. Compared with the prior art, on one hand, dispersed placement of the raw materials is achieved through the stacked reaction crucibles; and by the adoption of a dispersed loading manner, overstocking of the raw materials is relieved, carbonization and crystallization are retarded, preparation of higher quantity measured in kilograms powder is achieved, and the output rate is increased. On the other hand, primary low-temperature impurity removal, secondary low-temperature impurity removal and tertiary high-temperature impurity removal are achieved through gaseous substances decomposed from the PVC particle layer 400 within different temperature ranges, such that the impurity removal effect is greatly improved, and the purity of the powder can be effectively improved.

The above descriptions are merely the detailed description of embodiments of the present disclosure, which are not intended to limit the protection scope of the present disclosure. Any change or replacement which is easily made by those skilled in the art within the technical scope described in the present disclosure should fall within the protection scope of the present disclosure. Therefore, the protection scope of the present disclosure should follow the protection scope of the claims.

## Claims

1. A synthesis method for higher quantity measured in kilograms silicon carbide powder, comprising
loading carbon and silicon raw materials in a plurality of reaction crucibles in a preset ratio, an impurity removal hole being formed in a top end of each reaction crucible;
stacking the plurality of reaction crucibles in an accommodating crucible, and placing the accommodating crucible in a furnace chamber;
laying a PVC particle layer at a bottom of the accommodating crucible;
performing displacement vacuum-pumping on the furnace chamber;
heating the furnace chamber to a first impurity removal temperature T1, keeping for first preset time t1, and pumping vacuum after injecting rare gas into the furnace chamber, so as to decompose the PVC particle layer into primary decomposition products and primary decomposition gas, and achieve primary impurity removal through the primary decomposition gas;
heating the furnace chamber to a second impurity removal temperature T2, keeping for second preset time t2, and pumping vacuum after injecting rare gas into the furnace chamber, so as to decompose the primary decomposition products into secondary decomposition products and secondary decomposition gas, and achieve secondary impurity removal through the secondary decomposition gas;
heating the furnace chamber to a third impurity removal temperature T3, keeping for third preset time t3, and pumping vacuum after injecting rare gas into the furnace chamber, so as to decompose the secondary decomposition products into tertiary decomposition products and tertiary decomposition gas, and achieve tertiary impurity removal through the tertiary decomposition gas;
heating the furnace chamber to a preliminary reaction temperature T4, and keeping for fourth preset time t4, so as to achieve a preliminary synthesis reaction between the carbon and silicon raw materials;
heating the furnace chamber to a transformation reaction temperature T5, and keeping for fifth preset time t5, so as to achieve a transformation synthesis reaction between the carbon and silicon raw materials; and
cooling the furnace chamber;
wherein the first impurity removal temperature T1 is 100-500°C, the first preset time t1 is 1-5 hours, the second impurity removal temperature T2 is 500-900°C, the second preset time t2 is 10-15 hours, the third impurity removal temperature T3 is 1,200-1,400°C, the third preset time t3 is 5-10 hours, the preliminary reaction temperature T4 is 1,800-1,900°C, the fourth preset time t4 is 4-6 hours, the transformation reaction temperature T5 is 2,100-2,200°C, and the fifth preset time t5 is 15-30 hours.

2. The synthesis method for the higher quantity measured in kilograms silicon carbide powder according to claim 1, wherein
before the step of loading carbon and silicon raw materials in a plurality of reaction crucibles in a preset ratio, the synthesis method further comprises:
laying a PVC particle layer at bottoms of the plurality of reaction crucibles.

3. The synthesis method for the higher quantity measured in kilograms silicon carbide powder according to claim 1, wherein
the step of heating the furnace chamber to a first impurity removal temperature T1, keeping for first preset time t1, and pumping vacuum after injecting rare gas into the furnace chamber, comprises:
heating the furnace chamber to 100-500°C, and keeping for 1-5 hours, so as to decompose the PVC particle layer into primary decomposition products and primary decomposition gas;
injecting argon into the furnace chamber to 500-700 torr, and keeping for 10-30 minutes; and
pumping vacuum from the furnace chamber to at least e⁻⁴ pa, and taking away impurity gas under an adhesive action of the primary decomposition gas for expelling.

4. The synthesis method for the higher quantity measured in kilograms silicon carbide powder according to claim 1, wherein
the step of heating the furnace chamber to a second impurity removal temperature T2, keeping for second preset time t2, and pumping vacuum after injecting rare gas into the furnace chamber, comprises:
heating the furnace chamber to 500-900°C, and keeping for 10-15 hours, so as to decompose the primary decomposition products into secondary decomposition products and secondary decomposition gas;
injecting argon into the furnace chamber to 100-500 torr, and keeping for 10-30 minutes; and
pumping vacuum from the furnace chamber to at least e⁻⁴ pa, and taking away impurity gas under an adhesive action of the secondary decomposition gas for expelling.

5. The synthesis method for the higher quantity measured in kilograms silicon carbide powder according to claim 1, wherein
the step of heating the furnace chamber to a third impurity removal temperature T3, keeping for third preset time t3, and pumping vacuum after injecting rare gas into the furnace chamber, comprises:
heating the furnace chamber to 1,200-1,400°C, and keeping for 5-10 hours, so as to decompose the secondary decomposition products into tertiary decomposition products and tertiary decomposition gas;
injecting argon into the furnace chamber to 20-100 torr, and keeping for 10-30 minutes; and
pumping vacuum from the furnace chamber to at least e⁻⁴ pa, and taking away impurity gas under an adhesive action of the tertiary decomposition gas for expelling;
wherein the tertiary decomposition products are carbon, and the tertiary decomposition gas is hydrogen and chlorine.

6. The synthesis method for the higher quantity measured in kilograms silicon carbide powder according to claim 1, wherein
before the step of stacking the plurality of reaction crucibles in an accommodating crucible, the synthesis method further comprises:
uniformly and flatly pasting a plurality of layers of graphite flakes at bottoms of the plurality of reaction crucibles.

7. The synthesis method for the higher quantity measured in kilograms silicon carbide powder according to claim 1, wherein
before the step of heating the furnace chamber to a first impurity removal temperature T1, keeping for first preset time t1, and pumping vacuum after injecting rare gas into the furnace chamber, the synthesis method further includes:
adjusting a temperature field, such that an axial gradient of an upper temperature range of the temperature field is 100-200°C, and an axial gradient of a lower temperature range is 30-80°C; and
adjusting a relative position of the accommodating crucible in the temperature field, such that the accommodating crucible is located within the upper temperature range.

8. The synthesis method for the higher quantity measured in kilograms silicon carbide powder according to claim 7, wherein
the step of heating the furnace chamber to a transformation reaction temperature T5, and keeping for fifth preset time t5, comprises:
adjusting the relative position of the accommodating crucible in the temperature field, such that the accommodating crucible is located within the lower temperature range; and
heating the furnace chamber to 2,100-2,200°C for a transformation synthesis reaction, wherein transformation synthesis time lasts for 15-30 hours.
